# FASCICULE DE BREVET EUROPEEN

(11) **EP 1 641 223 B1**
(45) Date de publication et mention de la délivrance du brevet: **21.04.2010**
(21) Numéro de dépôt: 05300682.1
(22) Date de dépôt: 19.08.2005
(51) Int. Cl.: H04L 29/12

(54) **Procédé perfectionné d'attribution d'identifiants de réseau, au moyen d'identifiants d'interfaces**
Verbessertes Verfahren zur Zuordnung von Netzwerkidentifizierungen anhand Schnittstellenidentifizierungen
Improved method for assigning network identifiers using interface identifiers

(30) Priorité: 23.09.2004 FR 0452145
(43) Date de publication de la demande: 29.03.2006
(73) Titulaire: Alcatel Lucent, 75008 Paris (FR)
(72) Inventeur: Clevy, Laurent, 28000, CHARTRES (FR); Ivaldi, Guillaume, Agoura Hills, CA 91302 (US)
(74) Mandataire: Chaffraix, Sylvain

(56) Documents cités:
- EP-A- 1 081 899
- US-A1- 2003 182 445
- TROAN O ET AL: "IPV6 PREFIX OPTIONS FOR DYNAMIC HOST CONFIGURATION PROTOCOL (DHCP) VERSION 6" RFC 3633, décembre 2003 (2003-12), XP002293412

## Description

L'invention concerne le domaine des réseaux à protocole Internet (ou IP), et plus précisément les procédés utilisés dans de tels réseaux pour l'attribution d'identifiants de réseau à des interfaces de communication d'équipements de réseau.

Comme le sait l'homme de l'art, pour que des équipements de réseau, comme par exemple des routeurs, puissent communiquer entre eux au sein d'un réseau IP, il est indispensable que leurs interfaces de communication soient configurées à cet effet au moyen d'un identifiant de réseau fourni, par exemple, par un serveur d'identifiants de réseau appartenant audit réseau IP.

Il est rappelé que l'identifiant de réseau constitue l'une des deux parties de l'adresse IP d'une interface, l'autre partie étant l'identifiant d'interface. L'identifiant de réseau est généralement défini par les 64 bits les plus à gauche de l'adresse IP et parmi lesquels 48 bits définissent un préfixe, tandis que l'identifiant d'interface est généralement défini par les 64 bits les plus à droite de l'adresse IP.

Par exemple, dans le cas d'un réseau de type IPv6 (ou IP version n°6), les équipements de réseau et le serveur utilisent un protocole de configuration d'hôte dynamique de type DHCP (pour « Dynamic Host Configuration Protocol ») pour permettre l'attribution des identifiants de réseau des interfaces.

Cette attribution d'identifiant de réseau d'interface se fait au moyen d'un procédé comportant généralement deux étapes. La première étape consiste à générer au niveau d'un équipement de réseau, à destination du serveur d'identifiants de réseau, une requête d'attribution d'un identifiant de réseau d'interface pour l'une de ses interfaces. La seconde étape consiste à déterminer un identifiant de réseau d'interface pour l'interface objet de la requête, au niveau du serveur d'identifiants de réseau qui reçoit cette requête, puis à transmettre cet identifiant de réseau d'interface déterminé à l'équipement de réseau requérant, afin qu'il configure son interface compte tenu de l'identifiant de réseau d'interface reçu.

Ce procédé fournit des identifiants de réseau d'interface qui conviennent à la configuration des interfaces dans de nombreuses situations. Mais, tel n'est pas le cas lorsque les identifiants de réseau d'interface sont attribués à des interfaces qui sont raccordées à un même lien (ou « link ») et sont donc destinées à communiquer directement entre elles. Cela résulte du fait que les serveurs d'identifiants de réseau actuels ne sont pas capables de détecter les interconnexions entre équipements de réseau.

Pour tenter de remédier à cet inconvénient dans les réseaux IPv6 comportant des équipements de réseau et des serveurs utilisant le protocole DHCPv6 (version n°6), l'IETF (« Internet Engineering Task Force ») a proposé de mettre en oeuvre une délégation de préfixes hiérarchisée ou HPD (pour « Hierarchical Prefix Delegation »). Cette délégation est notamment décrite dans le document « draft-bykim-ipv6-hpd-01.txt », ETRI, 15 février 2004, accessible à l'adresse Internet http://ietfreport.isoc.org/all-ids/draft-bykim-ipv6-hpd-01.txt.

Cette solution est certes prometteuse, mais elle soulève des problèmes de sécurité et de souplesse qui nécessitent la mise en place de mécanismes additionnels, et vraisemblablement complexes, encore inconnus et de nature à limiter leur utilisation par les clients auxquels appartiennent les équipements de réseau.

US2003/182445A1 décrit un procédé et un serveur pour l'attribution dynamique d'identifiants de réseau, conformes aux préambules des revendications 1 et 10, ainsi qu'un équipement de réseau selon le préambule de la revendication 16. Dans un mode de réalisation, des routeurs intermédiaires transfèrent un message de requête de préfixe en y ajoutant des identifiants d'interfaces, de sorte que le serveur de préfixe accumule des informations sur la topologie du réseau à partir des messages de requête. Dans certaines topologies, une partie du préfixe réseau obtenu par ce procédé peut être utilisée pour trouver une route pour toutes les adresses partageant cette partie du préfixe réseau.

Aucun procédé d'attribution d'identifiants de réseau d'interface connu n'apportant une entière satisfaction, l'invention a donc pour but d'améliorer la situation.

Elle propose à cet effet un procédé d'attribution dynamique d'identifiants de réseau d'interface,selon la revendication 1.

Le procédé selon l'invention peut comporter des caractéristiques complémentaires qui peuvent être prises séparément ou en combinaison, et notamment :
- on peut stocker, dans une table de correspondance du serveur d'identifiants de réseau, chaque identifiant de réseau d'interface déterminé en correspondance des identifiants d'interface reçus, associés à un même lien, lesquels constituent ensemble un jeu,
   ➢ la détermination d'un identifiant de réseau d'interface peut alors consister à déterminer si l'un au moins des identifiants d'interface contenus dans une requête reçue est identique à l'un des identifiants d'interface d'un jeu stocké dans la table de correspondance, afin d'attribuer à l'interface objet de la requête un identifiant de réseau d'interface qui est soit celui qui est stocké en correspondance de l'un des jeux en cas d'identité, soit nouveau en cas d'absence d'identité,
      ■ en cas d'attribution d'un nouvel identifiant de réseau d'interface, on peut stocker dans la table de correspondance du serveur le nouvel identifiant de réseau d'interface en correspondance du jeu d'identifiants d'interface reçu,
      ■ en cas d'identité entre l'un au moins des identifiants d'interface contenus dans une requête reçue et l'un des identifiants d'interface d'un jeu stocké, on peut déterminer si le jeu d'identifiants d'interface reçu est entièrement identique à ce jeu stocké, afin de mettre à jour ce jeu stocké en cas d'identité incomplète,
- on peut intégrer dans la requête d'attribution d'identifiant de réseau d'interface un identifiant de séquence afin de permettre sa transmission au serveur sous la forme d'une séquence de paquets comportant chacun un même identifiant de séquence,
- en cas de besoin d'attribution d'un identifiant de réseau d'interface pour une interface raccordée à un lien, on peut déterminer, au niveau de l'équipement de réseau auquel appartient cette interface, les identifiants des interfaces qui sont raccordées au même lien qu'elle,
   ➢ on peut alors procéder à la détermination des identifiants d'interface au moyen d'un protocole de découverte d'interfaces voisines, comme par exemple le protocole NDP (chaque identifiant d'interface déterminé étant alors une adresse locale de lien).

L'invention propose également un serveur, pour l'attribution dynamique d'identifiants de réseau d'interface de type DHCP pour la configuration IP d'interfaces d'équipements de réseau raccordés à un réseau de communications à protocole Internet, comprenant des moyens de traitement chargés, en cas de réception d'une requête d'attribution d'un identifiant de réseau d'interface du type de celle présentée ci-avant, de déterminer pour l'interface objet de la requête un identifiant de réseau d'interface commun à toutes les interfaces qui sont raccordées au même lien qu'elle, en vue de la transmission de cet identifiant de réseau d'interface déterminé à l'équipement de réseau ayant transmis la requête, afin qu'il configure son interface.

Ce serveur peut comprendre une mémoire propre à stocker dans une table de correspondance chaque identifiant de réseau d'interface, déterminé par ses moyens de traitement, en correspondance du jeu d'identifiants d'interface reçu, associés à un même lien. Dans ce cas, les moyens de traitement peuvent être chargés de déterminer si l'un au moins des identifiants d'interface reçus dans une requête est identique à l'un des identifiants d'interface d'un jeu stocké dans la mémoire, puis d'attribuer à l'interface objet de la requête un identifiant de réseau d'interface qui est soit celui qui est stocké en correspondance de l'un des jeux, en cas d'identité, soit nouveau, en cas d'absence d'identité. Les moyens de traitement peuvent alors être agencés, en cas d'attribution d'un nouvel identifiant de réseau d'interface, pour stocker, dans la table de correspondance de la mémoire, chaque nouvel identifiant de réseau d'interface en correspondance du jeu d'identifiants d'interface reçu. Les moyens de traitement peuvent être également agencés, en cas d'identité entre l'un au moins des identifiants d'interface reçus dans une requête et l'un des identifiants d'interface d'un jeu stocké, pour déterminer si le jeu d'identifiants d'interface reçu est entièrement identique à ce jeu stocké, puis pour mettre à jour le jeu stocké, dans la mémoire, en cas d'identité incomplète.

Un tel serveur peut par exemple faire partie, au moins partiellement, d'un routeur IP de type DHCP.

L'invention propose également un équipement de réseau, pour un réseau de communications à protocole Internet comportant un serveur d'attribution dynamique d'identifiants de réseau d'interface, de type DHCP, comportant au moins une interface, raccordée à un lien et associée à un identifiant d'interface, et des moyens de gestion chargés, lorsque cette interface doit être configurée au moyen d'un identifiant de réseau d'interface, de générer, à destination du serveur, une requête d'attribution d'identifiant de réseau d'interface spécifiant l'identifiant de l'interface ainsi que les identifiants des autres interfaces raccordées au même lien qu'elle.

Les moyens de gestion peuvent par exemple être agencés de manière à intégrer dans la requête d'attribution d'identifiant de réseau d'interface un identifiant de séquence afin de permettre sa transmission au serveur sous la forme d'une séquence de paquets comportant chacun un même identifiant de séquence.

Par ailleurs, les moyens de gestion peuvent être chargés, lorsqu'un identifiant de réseau d'interface doit être attribué à l'interface, de déterminer les identifiants des interfaces qui sont raccordées au même lien qu'elle. Dans ce cas, l'équipement de réseau peut comporter des moyens de détermination chargés de déterminer, au moyen d'un protocole de découverte d'interfaces voisines (comme par exemple le protocole NDP), un identifiant pour l'interface à configurer et des identifiants pour les interfaces raccordées au même lien qu'elle. Les moyens de gestion sont alors agencés pour déterminer auprès des moyens de détermination l'identifiant de l'interface à configurer et les identifiants des autres interfaces raccordées au même lien qu'elle.

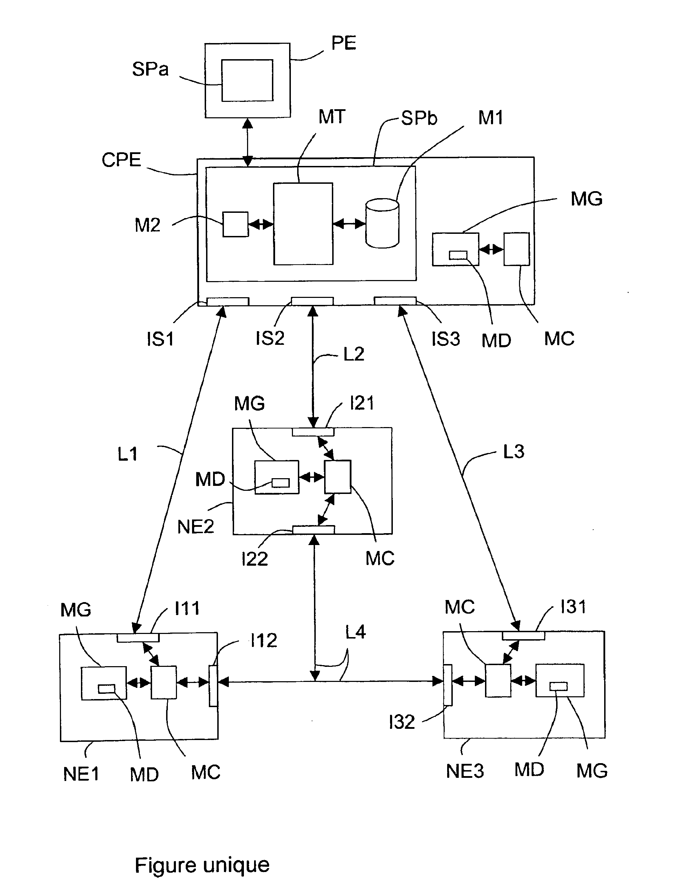

D'autres caractéristiques et avantages de l'invention apparaîtront à l'examen de la description détaillée ci-après, et du dessin annexé, sur lequel l'unique figure illustre de façon schématique une partie d'un réseau IP comportant un exemple de réalisation d'un serveur d'identifiants de réseau et des exemples de réalisation d'équipements de réseau adaptés à la mise en oeuvre de l'invention.

Le dessin annexé pourra non seulement servir à compléter l'invention, mais aussi contribuer à sa définition, le cas échéant.

L'invention a pour objet de permettre une attribution d'identifiants de réseau d'interface à des interfaces d'équipements d'un réseau de communications à protocole Internet (ou IP), prenant en compte les liens établis entre ces interfaces.

Dans ce qui suit, on considère à titre d'exemple illustratif que le réseau de communications est de type IPv6. Mais, l'invention n'est pas limitée à cet exemple de réseau. Elle concerne en effet tous les réseaux de communications de type IP et notamment les réseaux de type IPv4.

Dans l'exemple non limitatif illustré sur l'unique figure, le réseau IP comporte un serveur d'identifiants de réseau SPa, SPb couplé, via des liens L1, L2 et L3, respectivement à trois équipements de réseau NE1, NE2 et NE3, eux-mêmes couplés entre eux par un lien L4. L'invention n'est pas limitée à ce nombre d'équipements de réseau NEi, ni à ce couplage entre équipements de réseau NEi (ici i = 1 à 3). Elle concerne en effet toute configuration de réseau comportant au moins un serveur d'identifiants de réseau SPa, SPb raccordé à au moins deux équipements de réseau NEi (i>1) raccordés entre eux par un lien L.

Comme cela est illustré sur l'unique figure, le serveur d'identifiants de réseau d'interface SPa, SPb (ci-après appelé « le serveur SP ») comporte une première partie SPa implantée dans un routeur périphérique PE d'un fournisseur de service Internet (ou ISP pour « Internet Service Provider »), et une seconde partie SPb implantée dans un routeur CPE, appartenant au propriétaire des équipements de réseau NEi et raccordé, via un lien, au routeur périphérique PE.

Le routeur CPE comprend ici au moins trois interfaces ISi (ici i = 1 à 3) raccordées respectivement à trois liens de communication Li.

La seconde partie SPb du serveur SP comprend un module de traitement MT chargé de déterminer les identifiants de réseau d'interface pour les interfaces lij des équipements de réseau NEi auxquels les interfaces ISj du routeur CPE sont couplées par les liens Li.

Chaque équipement de réseau NEi (ci-après appelé « équipement ») comporte ici deux interfaces lij (ici j = 1 et 2, mais il pourrait prendre n'importe quelle valeur), l'une Ii1 étant raccordé à l'une des interfaces ISj du routeur CPE via le lien Li, l'autre Ii2 étant raccordée au lien L4.

Les équipements de réseau peuvent être de tout type dès lors qu'ils comportent des interfaces de communication utilisant un protocole Internet (ou IP) et disposant d'adresses d'interface présentant un identifiant de réseau commun lorsqu'elles partagent un même lien. Il peut donc s'agir, par exemple, de routeurs IP.

Par ailleurs, chaque équipement NEi comporte un module de configuration MC classique chargé de configurer ses différentes interfaces lij compte tenu, notamment, des identifiants de réseau d'interface attribués à chacune d'entre elles, conformément à l'invention, par le serveur SP.

On considère dans ce qui suit que le serveur SP et les équipements NEi sont tous agencés pour utiliser un protocole de configuration d'hôte dynamique de type DHCP (pour « Dynamic Host Configuration Protocol ») pour l'attribution des identifiants de réseau d'interface. Préférentiellement, ils utilisent la version n°6 du protocole DHCP (DHCPv6), telle que définie par la norme IETF référencée RFC-3315. D'autres versions du protocole DHCP peuvent être utilisées, comme par exemple « DHCP prefix option » définie par la norme IETF référencée RFC 3531.

Chaque équipement NEi comporte un module de gestion MG chargé de générer une requête d'attribution d'un identifiant de réseau d'interface, à destination du serveur SP, chaque fois que l'une des interfaces lij doit faire l'objet d'une configuration IP par le module de configuration MC associé.

Selon l'invention, chaque requête générée comporte l'identifiant de l'interface Iij à configurer ainsi que les identifiants des autres interfaces qui sont raccordées au même lien L4 qu'elle.

On considère dans ce qui suit, pour simplifier la description, que les références Iij désignent sans distinction les interfaces et leurs identifiants respectifs. Bien entendu, dans la pratique tel n'est pas le cas.

Chaque équipement NEi comporte un module de détermination d'identifiants d'interfaces voisines MD, chargé de déterminer sa ou ses propres listes d'interfaces voisines.

Un tel module de détermination MD peut, comme illustré, faire partie du module de gestion MG. Mais, dans une variante, il pourrait être indépendant de celui-ci, tout en lui étant couplé.

Par exemple, dans le cas d'un équipement NEi de type DHCP, le module de détermination MD peut être agencé de manière à déterminer les identifiants des interfaces voisines des interfaces lij au moyen d'un protocole de découverte d'interfaces voisines, comme par exemple le protocole NDP-IPv6 (pour « Neighbor Discovery Protocol ») défini par la norme IETF référencée RFC-2641.

Selon cette norme RFC-2641, lorsqu'un équipement NEi est mis sous tension, son module de détermination MD détermine automatiquement un identifiant pour chacune de ses interfaces Iij, appelé adresse locale de lien (ou « link-local address ») et comportant l'identifiant de réseau d'interface FE80 ::/11. Chacun de ses identifiants (ou adresses) est ensuite comparé, par le module de détermination MD, aux identifiants (ou adresses) déterminés par les équipements voisins pour leurs propres interfaces, de manière à assurer son unicité. Cette comparaison se fait au moyen du protocole DAD (pour « Duplicate Address Detection »). Le module de détermination MD dispose ainsi des listes d'identifiants des interfaces voisines de chaque interface lij de son équipement NEi.

Lorsque le module de gestion MG doit générer une requête d'attribution d'identifiant de réseau d'interface, il peut donc interroger le module de détermination MD pour obtenir l'identifiant de l'interface à configurer ainsi que la liste des identifiants des interfaces (voisines) qui sont raccordées au même lien L4 qu'elle.

On peut également envisager que le module de gestion MG charge le module de détermination MD de déterminer la liste des identifiants des interfaces voisines d'une interface lij de son équipement dès qu'il est chargé de générer une requête d'attribution d'identifiant de réseau d'interface pour cette interface Iij.

Dès que le module de gestion MG dispose de l'identifiant de l'interface Iij à configurer et de la liste des identifiants des interfaces (voisines) qui sont raccordées au même lien L4 que celle-ci, il peut les intégrer dans une requête d'attribution d'identifiant de réseau d'interface pour qu'elle soit transmise par son équipement NEi au serveur SP.

Une liste pouvant comporter un nombre important d'identifiants d'interfaces, le volume occupé par cette liste peut être supérieur à celui réservé aux données utiles (ou « payload ») au sein d'un paquet à transmettre. Par conséquent, le module de gestion MG peut être également agencé de manière à intégrer dans la requête d'attribution d'identifiant de réseau d'interface un identifiant de séquence (comme par exemple un numéro) afin qu'elle puisse être transmise au serveur SP sous la forme d'une séquence de paquets comportant chacun un même identifiant de séquence et une partie de la liste des identifiants des interfaces voisines.

Lorsque le serveur SP reçoit une requête d'attribution d'identifiant de réseau d'interface émanant d'un équipement NEi, il la transmet à son module de traitement MT, après l'avoir éventuellement reconstituée (lorsqu'elle se présente sous la forme d'une séquence de paquets).

Le module de traitement MT extrait de la requête l'identifiant de l'interface Iij à configurer (et objet de la requête) ainsi que les identifiants des interfaces voisines. Puis, il détermine un identifiant de réseau d'interface commun à toutes ces interfaces qui sont raccordées à un même lien, et le communique à son serveur SP afin qu'il le transmette à l'équipement NEi qui a transmis la requête, pour qu'il puisse configurer l'interface concernée Iij.

Comme illustré, le serveur SP comprend de préférence une mémoire M1 couplée au module de traitement MT et destinée à stocker, par exemple sous la forme d'une table de correspondance, chaque identifiant de réseau d'interface déterminé en correspondance de l'identifiant de l'interface à configurer Iij et des identifiants des interfaces voisines, qui constituent ensemble un jeu reçu (associé à un même lien).

Par exemple, lorsque toutes les interfaces Iij des équipements NEi du réseau illustré ont été configurées et donc qu'elles sont associées à des identifiants de réseau d'interface Pi, la table de correspondance comporte les quatre multiplets suivants : (P1, I11, IS1) pour le lien L1, (P2, I21, IS2) pour le lien L2, (P3, I31, IS3) pour le lien L3, et (P4, I12, I22, I32) pour le lien L4. Au sein d'un multiplet stocké, on appelle « jeu d'identifiants stocké » l'ensemble des identifiants d'interface qu'il contient.

En présence d'une telle mémoire M1, lorsque le module de traitement MT dispose d'un jeu d'identifiants reçu, il détermine si l'un au moins des identifiants d'interface de ce jeu reçu est identique à l'un des identifiants d'interface de l'un des jeux contenus dans les multiplets stockés dans la mémoire M1.

Si tel est le cas, le module de traitement MT attribue à l'interface à configurer l'identifiant de réseau d'interface qui est contenu dans le multiplet contenant le jeu stocké qui comporte un identifiant identique à l'un des identifiants du jeu reçu.

Dans le cas contraire, c'est-à-dire en l'absence d'identité, le module de traitement MT est en présence d'un nouveau jeu associé à un nouveau lien non répertorié. Il détermine alors un nouvel identifiant de réseau d'interface, pas encore attribué aux interfaces des liens connus, pour l'interface à configurer et plus généralement pour toutes les interfaces constituant son nouveau jeu.

Le module de traitement MT choisit chaque nouvel identifiant de réseau d'interface parmi un ensemble d'identifiants de réseau d'interface stockés, par exemple et comme illustré, dans une mémoire M2 à laquelle il est couplé (mais qu'il peut également comprendre). Ce choix se fait de manière connue.

Une fois que le module de traitement MT a déterminé un nouvel identifiant de réseau d'interface pour une interface à configurer, il génère un message, comportant ledit identifiant de réseau d'interface, qu'il communique à son serveur SP afin qu'il le transmette à l'équipement NEi ayant transmis la requête. L'équipement NEi transmet alors le message à son module de configuration MC qui se charge ensuite de configurer l'interface concernée Iij compte tenu, notamment, de l'identifiant de réseau d'interface qui lui a été attribué par le serveur SP.

Par ailleurs, une fois que le module de traitement MT a déterminé un nouvel identifiant de réseau d'interface pour une interface à configurer, il génère un nouveau multiplet comportant le nouvel identifiant de réseau d'interface Pj en correspondance du nouveau jeu d'identifiants reçu. Cela permet d'enrichir la table de correspondance stockée dans la mémoire M1 et donc de faciliter le mécanisme d'attribution d'identifiants de réseau d'interface. Ainsi, lorsque le module de traitement MT recevra une requête concernant une interface dont l'identifiant est compris dans le nouveau multiplet stocké, il n'aura qu'à lui attribuer automatiquement l'identifiant de réseau d'interface compris dans ledit nouveau multiplet.

Le module de traitement MT est également préférentiellement agencé de manière à mettre à jour un multiplet de la table de correspondance, lorsque le jeu d'identifiants qu'il contient n'est pas complètement identique à un jeu d'identifiants reçu dans une requête. La mise à jour d'un multiplet consiste par exemple à remplacer le jeu stocké par le jeu reçu, tout en conservant son identifiant de réseau d'interface. Cela est particulièrement avantageux car les jeux, contenant des interfaces raccordées respectivement à des liens communs, varient fréquemment dans les réseaux IP.

L'invention est particulièrement avantageuse du fait que lorsqu'un nouvel identifiant de réseau d'interface est attribué consécutivement à la réception d'un nouveau jeu d'identifiants, aucun délai n'est requis pour vérifier si un tel nouvel identifiant de réseau d'interface est nécessaire ou non.

Il est important de noter que le mode d'attribution d'un identifiant de réseau d'interface pour une interface lij d'un équipement NEi peut s'appliquer également aux interfaces du routeur CPE dans lequel est implantée la seconde partie SPb du serveur SP. Il faut alors que le routeur CPE dispose d'un module de gestion MG, d'un module de détermination d'identifiants d'interfaces voisines MD et d'un module de configuration MC.

Le module de traitement MT, les mémoires M1 et M2, le module de gestion MG, le module de détermination d'identifiants d'interfaces voisines MD et le module de configuration MC, peuvent être réalisés sous la forme de circuits électroniques, de modules logiciels (ou informatiques), ou d'une combinaison de circuits et de logiciels.

On va maintenant décrire un exemple d'utilisation de l'invention en référence à l'exemple illustré sur l'unique figure.

Dans cet exemple, l'équipement NE1 souhaite configurer son interface I12 afin qu'elle puisse communiquer directement avec les interfaces I22 et I32 des équipements voisins NE2 et NE3, raccordées au lien L4.

Le module de gestion MG de l'équipement NE1 détermine auprès du module de détermination MD l'identifiant de l'interface I12 à configurer et les identifiants des interfaces voisines I22 et I23 qui sont raccordées au même lien L4 que celle-ci. Puis il intègre ces identifiants (I12, I22, I23) dans une requête d'attribution d'identifiant de réseau d'interface afin qu'elle soit transmise par son équipement NE1 au serveur SP.

A réception de la requête, le serveur SP la transmet à son module de traitement MT qui en extrait le jeu d'identifiants (I12, I22, I23). Puis, il détermine un identifiant de réseau d'interface commun à ces trois interfaces raccordées au lien L4. Pour ce faire, il accède à la mémoire M1 afin de comparer les identifiants contenus dans le jeu reçu (I12, I22, I23) aux identifiants contenus dans les jeux qu'elle stocke.

Si la mémoire M1 comporte le multiplet (P4, I12, I22, I32), il y a identité complète entre les jeux reçu et stocké, si bien que le module de traitement MT attribue à l'interface I12 l'identifiant de réseau d'interface P4. Puis, il génère un message, comportant l'identifiant de réseau d'interface P4, qu'il communique à son serveur SP afin qu'il le transmette à l'équipement NE1, lequel le transmet alors à son module de configuration MC qui se charge ensuite de configurer l'interface I12.

Si la mémoire M1 comporte un multiplet (P4, I22, I32), il y a identité partielle entre les jeux reçu et stocké, si bien que le module de traitement MT attribue également à l'interface I12 l'identifiant de réseau d'interface P4. Puis, le module de traitement MT met à jour la mémoire M1 en remplaçant l'ancien multiplet (P4, I22, I32) par un nouveau multiplet (P4, I12, I22, 132). Il génère ensuite, ou sensiblement simultanément, un message, comportant l'identifiant de réseau d'interface P4, qu'il communique à son serveur SP afin qu'il le transmette à l'équipement NE1, lequel le transmet alors à son module de configuration MC qui se charge ensuite de configurer l'interface I12.

Si maintenant la mémoire M1 ne comporte pas de multiplet contenant l'un des identifiants reçus I12, I22 et I32, le module de traitement MT est en présence d'un nouveau jeu et choisit un nouvel identifiant de réseau d'interface parmi les identifiants de réseau d'interface stockés dans la mémoire M2 et pas encore attribués. Puis, le module de traitement MT génère un nouveau multiplet (P4, I12, I22, I32) qu'il stocke dans la mémoire M1. Il génère ensuite, ou sensiblement simultanément, un message, comportant l'identifiant de réseau d'interface P4, qu'il communique à son serveur SP afin qu'il le transmette à l'équipement NE1, lequel le transmet alors à son module de configuration MC qui se charge ensuite de configurer l'interface I12.

L'invention peut être également considérée sous la forme d'un procédé d'attribution dynamique d'identifiants de réseau d'interface pour des interfaces Iij d'équipements de réseau NEi de type DHCP.

Celui-ci peut être notamment mis en oeuvre à l'aide des équipements de réseau NEi et du serveur SP présentés ci-avant. Les fonctions et sous-fonctions principales et optionnelles assurées par les étapes de ce procédé étant sensiblement identiques à celles assurées par les différents moyens constituant les équipements de réseau NEi et le serveur SP, seules seront résumées ci-après les étapes mettant en oeuvre les fonctions principales du procédé selon l'invention.

Ce procédé consiste, lorsqu'un équipement de réseau NEi a besoin d'un identifiant de réseau d'interface pour l'une de ses interfaces Iij (désignée par un identifiant d'interface et raccordée à un lien L4), d'une première part, à générer au niveau de cet équipement de réseau NEi, et à destination du serveur d'identifiants de réseau SP, une requête d'attribution d'un identifiant de réseau d'interface spécifiant l'identifiant de l'interface Iij objet de la requête ainsi que les identifiants des autres interfaces qui sont raccordées au même lien L4 que celle-ci, d'une deuxième part, à réception de la requête au niveau du serveur d'identifiants de réseau SP, à déterminer pour l'interface Iij objet de la requête un identifiant de réseau d'interface commun à toutes les interfaces raccordées au même lien L4 qu'elle, et d'une troisième part, à transmettre à l'équipement de réseau NEi requérant l'identifiant de réseau d'interface déterminé, afin qu'il configure son interface Iij.

L'invention ne se limite pas aux modes de réalisation de serveur d'identifiants de réseau, de routeur, d'équipement de réseau et de procédé d'attribution d'identifiants de réseau d'interface décrits ci-avant, seulement à titre d'exemple, mais elle englobe toutes les variantes que pourra envisager l'homme de l'art dans le cadre des revendications ci-après.

## Revendications

1. Procédé d'attribution dynamique d'identifiants de réseau d'interface pour des interfaces (I12, 122, 132) d'équipements de réseau (NE1, NE2, NE3) raccordés à un réseau de communications à protocole Internet comportant un serveur d'identifiants de réseau (SPb),ledit procédé consistant, lorsqu'un équipement de réseau (NE1) a besoin d'un identifiant de réseau d'interface pour l'une de ses interfaces (I12), désignée par un identifiant d'interface et raccordée à un lien (L4), i) à générer au niveau dudit équipement de réseau (NE1), et à destination dudit serveur (SPb), une requête d'attribution d'un identifiant de réseau d'interface, ii) à réception de ladite requête dans ledit serveur (SPb), à déterminer pour ladite interface (I12) objet de la requête un identifiant de réseau d'interface, et iii) à transmettre ledit identifiant de réseau d'interface déterminé audit équipement de réseau requérant (NE1), de sorte qu'il configure ladite interface (I12). **caractérisé en ce que** le serveur d'identifiants de réseau est de type DHCP, et que la requête d'attribution générée au niveau dudit équipement de réseau spécifie l'identifiant de l'interface (I12) objet de la requête ainsi que les identifiants des autres interfaces raccordées audit lien (L4), et que l'identifiant de réseau d'interface déterminé par le serveur est commun à toutes les interfaces raccordées au même lien (L4) que l'interface objet de la requête.

2. Procédé selon la revendication 1, **caractérisé en ce que** l'on stocke dans une table, au niveau dudit serveur (SPb), chaque identifiant de réseau d'interface déterminé en correspondance des identifiants d'interface reçus, associés à un même lien (L4), lesquels constituent un jeu.

3. Procédé selon la revendication 2, **caractérisé en ce que** ladite détermination d'identifiant de réseau d'interface consiste à déterminer si l'un au moins desdits identifiants d'interface reçus dans une requête est identique à l'un des identifiants d'interface d'un jeu stocké, de manière à attribuer à l'interface objet de la requête un identifiant de réseau d'interface qui est soit celui stocké en correspondance de l'un des jeux en cas d'identité, soit nouveau en cas d'absence d'identité.

4. Procédé selon la revendication 3, **caractérisé en ce qu'**en cas d'attribution d'un nouvel identifiant de réseau d'interface, on stocke dans ladite table dudit serveur (SPb) chaque nouvel identifiant de réseau d'interface en correspondance du jeu d'identifiants d'interface reçu.

5. Procédé selon l'une des revendications 3 et 4, **caractérisé en ce qu'**en cas d'identité entre l'un au moins des identifiants d'interface reçus dans une requête et l'un des identifiants d'interface d'un jeu stocké, on détermine si le jeu d'identifiants d'interface reçu est entièrement identique audit jeu stocké, de manière à mettre à jour ledit jeu stocké en cas d'identité incomplète.

6. Procédé selon l'une des revendications 1 à 5, **caractérisé en ce que** l'on intègre dans ladite requête d'attribution d'identifiant de réseau d'interface un identifiant de séquence de manière à permettre sa transmission audit serveur (SPb) sous la forme d'une séquence de paquets comportant chacun un même identifiant de séquence.

7. Procédé selon l'une des revendications 1 à 6, **caractérisé en ce qu'**en cas de besoin d'attribution d'un identifiant de réseau d'interface pour une interface (I12) raccordée à un lien (L4), on détermine, au niveau de l'équipement de réseau (NE1) auquel appartient ladite interface (I12), les identifiants des interfaces raccordées au même lien qu'elle.

8. Procédé selon la revendication 7, **caractérisé en ce que** l'on procède à ladite détermination au moyen d'un protocole de découverte d'interfaces voisines.

9. Procédé selon la revendication 8, **caractérisé en ce que** ledit protocole de découverte d'interfaces voisines est le protocole NDP, chaque identifiant d'interface déterminé étant alors une adresse locale de lien.

10. Serveur (SPb) pour l'attribution dynamique d'identifiants de réseau d'interface pour la configuration IP d'interfaces (I12) d'équipements de réseau (NE1) raccordés à un réseau de communications à protocole Internet, ledit serveur comprenant des moyens de traitement (MT) agencés, en cas de réception d'une requête d'attribution d'un identifiant de réseau d'interface, pour une interface (I12) d'un équipement de réseau (NE1) raccordée à un lien (L4), pour déterminer pour ladite interface (I12) objet de la requête un identifiant de réseau d'interface, en vue de la transmission dudit identifiant de réseau d'interface déterminé audit équipement de réseau requérant (NE1) pour qu'il configure ladite interface (I12), **caractérisé en ce que** ledit serveur est de type DHCP et que lesdits moyens de traitement sont aptes, en cas de réception d'une requête d'attribution d'un identifiant de réseau d'interface comportant l'identifiant de l'interface objet de la requête (I12) ainsi que les identifiants d'interface des autres interfaces raccordées au même lien (L4) que l'interface objet de la requête, à déterminer pour ladite interface (I12) objet de la requête un identifiant de réseau d'interface commun à toutes les interfaces raccordées au même lien (L4) que l'interface objet de la requête.

11. Serveur selon la revendication 10, **caractérisé en ce qu'**il comprend une mémoire (M1) propre à stocker dans une table chaque identifiant de réseau d'interface, déterminé par lesdits moyens de traitement (MT), en correspondance des identifiants d'interface reçus, associés à un même lien (L4), lesquels constituent un jeu.

12. Serveur selon la revendication 11, **caractérisé en ce que** lesdits moyens de traitement (MT) sont agencés pour déterminer si l'un au moins desdits identifiants d'interface reçus dans une requête est identique à l'un des identifiants d'interface d'un jeu stocké dans ladite mémoire (M1), puis pour attribuer à l'interface (I12) objet de la requête un identifiant de réseau d'interface qui est soit celui stocké en correspondance de l'un des jeux en cas d'identité, soit nouveau en cas d'absence d'identité.

13. Serveur selon la revendication 12, **caractérisé en ce que** lesdits moyens de traitement (MT) sont agencés, en cas d'attribution d'un nouvel identifiant de réseau d'interface, pour stocker dans la table de ladite mémoire (M1) chaque nouvel identifiant de réseau d'interface en correspondance du jeu d'identifiants d'interface reçu.

14. Serveur selon l'une des revendications 12 et 13, **caractérisé en ce que** lesdits moyens de traitement (MT) sont agencés, en cas d'identité entre l'un au moins des identifiants d'interface reçus dans une requête et l'un des identifiants d'interface d'un jeu stocké, pour déterminer si le jeu d'identifiants d'interface reçu est entièrement identique audit jeu stocké, puis pour mettre à jour ledit jeu stocké, dans ladite mémoire (M1), en cas d'identité incomplète.

15. Routeur IP (CPE) pour un réseau de communications à protocole Internet, **caractérisé en ce qu'**il comprend un serveur (SPb) selon l'une des revendications précédentes.

16. Equipement de réseau (NE1) pour un réseau de communications à protocole Internet comportant un serveur (SPb) d'attribution dynamique d'identifiants de réseau selon l'une des revendications 10 à 14, ledit équipement (NE1) comportant au moins une interface (I12) raccordée à un lien (L4) et associée à un identifiant d'interface, et des moyens de gestion (MG) agencés, lorsqu'un identifiant de réseau d'interface est requis pour ladite interface (I12), pour générer, à destination dudit serveur (SPb), une requête d'attribution d'un identifiant de réseau d'interface, **caractérisé en ce que** lesdits moyens de gestion sont aptes à générer une requête d'attribution d'un identifiant de réseau d'interface spécifiant l'identifiant de ladite interface (I12) ainsi que les identifiants d'interface des autres interfaces raccordées audit lien (L4).

17. Equipement de réseau selon la revendication 16, **caractérisé en ce que** lesdits moyens de gestion (MG) sont agencés pour intégrer dans ladite requête d'attribution d'identifiant de réseau d'interface un identifiant de séquence de manière à permettre sa transmission audit serveur (SPb) sous la forme d'une séquence de paquets comportant chacun un même identifiant de séquence.

18. Equipement de réseau selon l'une des revendications 16 et 17, **caractérisé en ce que** lesdits moyens de gestion (MG) sont agencés, en cas de besoin d'attribution d'un identifiant de réseau d'interface pour ladite interface (I12), pour déterminer lesdits identifiants des interfaces raccordées au même lien (L4) qu'elle.

19. Equipement de réseau selon la revendication 18, **caractérisé en ce qu'**il comprend des moyens de détermination (MD) propres à déterminer, au moyen d'un protocole de découverte d'interfaces voisines, un identifiant pour l'interface à configurer (I12) et des identifiants pour les interfaces raccordées au même lien (L4) que ladite interface à configurer (I12), et **en ce que** lesdits moyens de gestion (MG) sont agencés pour déterminer auprès desdits moyens de détermination (MD) l'identifiant de ladite interface à configurer (I12) et les identifiants desdites autres interfaces raccordées au même lien (L4) qu'elle.

20. Equipement de réseau selon la revendication 19, **caractérisé en ce que** ledit protocole de découverte d'interfaces voisines est le protocole NDP, chaque identifiant d'interface déterminé étant alors une adresse locale de lien.

## Claims

1. Method for the dynamic allocation of interface network identifiers for network device (NE1, NE2, NE3) interfaces (I12, 122, 132) said network devices connected to an Internet protocol communication network including a server of network identifiers (SPb), said method involving, when a network device (NE1) requires an interface network identifier for one of its interfaces (I12), designated by an interface identifier and connected to a link (L4), i) generating in said network device (NE1), and addressed to said server (SPb), a request for allocation of an interface network identifier, ii) on receipt of said request in said server (SPb), determining for said interface (I12) subject of the request an interface network identifier, and iii) sending said determined interface network identifier to said requesting network device (NE1), so that it configures said interface (I12), **characterized in that** the network identifiers server is of the DHCP type, and that the allocation request generated in said network device specifies the identifier of the interface (I12) subject of the request, as well as the identifiers of the other interfaces connected to said link (L4), and that the interface network identifier determined by the server is common to all interfaces connected to the same link (L4) as the interface subject of the request.

2. Method according to claim 1, **characterized by** the storage in a table, in said server (SPb), of each interface network identifier determined in correspondence with the interface identifiers received, associated with a same link (L4), all of which constitute a set.

3. Method according to claim 2, **characterized in that** said interface network identifier determination involves determining whether at least one of said interface identifiers received in a request is identical to one of the interface identifiers of a stored set, so as to allocate to the interface subject of the request an interface network identifier which is either the one stored in correspondence with one of the sets if identical, or new if not identical.

4. Method according to claim 3, **characterized in that** in the event of allocation of a new interface network identifier, each new interface network identifier is stored in said table of said server (SPb) in correspondence with the set of interface identifiers received.

5. Method according to one of claims 3 and 4, **characterized in that** if there is identicality between at least one of the interface identifiers received in a request and one of the interface identifiers of a stored set, it is determined whether the set of interface identifiers received is completely identical to said stored set, so as to update said stored set if not completely identical.

6. Method according to one of claims 1 to 5, **characterized in that** a sequence identifier is integrated into said interface network identifier allocation request so as to allow its transmission to said server (SPb) in the form of a sequence of packets, each containing a same sequence identifier.

7. Method according to one of claims 1 to 6, **characterized in that** in case of a requirement to allocate an interface network identifier for an interface (I12) connected to a link (L4), in the network device (NE1) to which said interface (I12) belongs, the interface identifiers connected to the same link as said interface are determined.

8. Method according to claim 7, **characterized in that** said determination is carried out using a neighboring interfaces discovery protocol.

9. Method according to claim 8, **characterized in that** said neighboring interfaces discovery protocol is the NDP protocol, with each interface identifier determined then being a local link address.

10. Server (SPb) for the dynamic allocation of interface network identifiers for the IP configuration of interfaces (I12) of network devices (NE1) connected to an Internet protocol communication network, said server including processing means (MT) configured, in case of receipt of a request for allocation of an interface network identifier, for an interface (I12) of a network device (NE1) connected to a link (L4), to determine for said interface (I12) subject of the request an interface network identifier, with a view to the transmission of said determined interface network identifier to said requesting network device (NE1) for it to configure said interface (I12), **characterized in that** said server is of the DHCP type and that said processing means are suitable, in case of receipt of an allocation request of an interface network identifier containing the identifier of the interface subject of the request (I12) as well as the interface identifiers of the other interfaces connected to the same link (L4) as the interface subject of the request, to determine for said interface (I12) subject of the request an interface network identifier common to all the interfaces connected to the same link (L4) as the interface subject of the request.

11. Server according to claim 10, **characterized in that** it includes a memory (M1) able to store in a table each interface network identifier, determined by said processing means (MT), in correspondence with the interface identifiers received, associated with a same link (L4), all of which constitute a set.

12. Server according to claim 11, **characterized in that** said processing means (MT) are configured to determine whether at least one of said interface identifiers received in a request is identical to one of the interface identifiers of a set stored in said memory (M1), then to allocate to the interface (I12) subject of the request an interface network identifier which is either the one stored in correspondence with one of the sets if identical, or new if not identical.

13. Server according to claim 12, **characterized in that** said processing means (MT) are configured, in the event of allocation of a new interface network identifier, to store in the table of said memory (M1) each new interface network identifier in correspondence with the set of interface identifiers received.

14. Server according to one of claims 12 and 13, **characterized in that** said processing means (MT) are configured, in the case of identicality between at least one of the interface identifiers received in a request and one of the interface identifiers of a stored set, to determine whether the set of interface identifiers received is completely identical to said stored set, then to update said stored set, in said memory (M1), if not completely identical.

15. IP router (CPE) for an Internet protocol communication network, **characterized in that** it includes a server (SPb) according to one of the previous claims.

16. Network device (NE1) for an Internet protocol communication network including a server (SPb) for dynamic allocation of network identifiers according to one of claims 10 to 14, said device (NE1) including at least one interface (I12) connected to a link (L4) and associated with an interface identifier, and management means (MG) configured, when an interface network identifier is required for said interface (I12), to generate, addressed to said server (SPb), a request for allocation of an interface network identifier, **characterized in that** said management means are able to generate a request for allocation of an interface network identifier specifying the identifier of said interface (I12) as well as the interface identifiers of the other interfaces connected to said link (L4).

17. Network device according to claim 16, **characterized in that** said management means (MG) are configured to integrate in said interface network identifier allocation request a sequence identifier so as to allow its transmission to said server (SPb) in the form of a sequence of packets, each containing a same sequence identifier.

18. Network device according to one of claims 16 and 17, **characterized in that** said management means (MG) are configured, if an interface network identifier needs to be allocated for said interface (I12), to determine said identifiers of the interfaces connected to the same link (L4) as that interface.

19. Network device according to claim 18, **characterized in that** it includes determination means (MD) able to determine, using a neighboring interfaces discovery protocol, an identifier for the interface to be configured (I12) and identifiers for the interfaces connected to the same link (L4) as said interface to be configured (I12), and **in that** said management means (MG) are configured to determine with said determination means (MD) the identifier of said interface to be configured (I12) and the identifiers of said other interfaces connected to the same link (L4) as that interface.

20. Network device according to claim 19, **characterized in that** said neighboring interfaces discovery protocol is the NDP protocol, with each interface identifier determined then being a local link address.

## Patentansprüche

1. Verfahren zur dynamischen Zuordnung von Schnittstellennetzwerk-Kennungen für Schnittstellen (I12, 122, 132) von Netzwerkeinrichtungen (NE1, NE2, NE3), welche an ein einen Netzwerkkennungs-Server (SPb) umfassendes internetprotokollbasiertes Kommunikationsnetzwerk angeschlossen sind, wobei das besagte Verfahren darin besteht, wenn eine Netzwerkeinrichtung (NE1) für eine ihrer Schnittstellen (I12), welche von einer Schnittstellenkennung bestimmt wurde und an einen Link (L4) angeschlossen ist, eine Schnittstellennetzwerk-Kennung benötigt, i) an der besagten Netzwerkeinrichtung (NE1) eine für den besagten Server (SPb) bestimmte Anforderung für die Zuordnung einer Schnittstellennetzwerk-Kennung zu erzeugen, ii) bei Empfang der besagten Anforderung in dem besagten Server (SPb) eine Schnittstellennetzwerk-Kennung für die besagte Schnittstelle (I12), auf welche sich die Anforderung bezieht, zu bestimmen, und iii) die besagte bestimmte Schnittstellennetzwerk-Kennung an die besagte anfordernde Netzwerkeinrichtung (NE1) zu übertragen, so dass sie die besagte Schnittstelle (I12) konfiguriert, **dadurch gekennzeichnet, dass** der Netzwerkkennungs-Server vom Typ DHCP ist, und dass die an der besagten Netzwerkeinrichtung erzeugte Zuordnungsanforderung die Kennung der Schnittstelle (I12), auf welche sich die Anforderung bezieht, sowie die Kennungen der übrigen an den besagten Link (L4) angeschlossenen Schnittstellen spezifiziert, und dass die von dem Server bestimmte Schnittstellennetzwerk-Kennung eine für alle an denselben Link (L4) wie die Schnittstelle, auf welche sich die Anforderung bezieht, angeschlossenen Schnittstellen gemeinsam ist.

2. Verfahren nach Anspruch 1, **dadurch gekennzeichnet, dass** man an dem besagten Server (SPb) alle Schnittstellennetzwerk-Kennungen, welche gemäß den empfangenen, einem selben Link (L4) zugeordneten Schnittstellenkennungen bestimmt wurden und eine Gruppe bilden, in einer Tabelle speichert.

3. Verfahren nach Anspruch 2, **dadurch gekennzeichnet, dass** die besagte Bestimmung einer Schnittstellennetzwerk-Kennung darin besteht, zu bestimmen, ob mindestens eine der besagten in einer Anforderung empfangenen Schnittstellenkennungen mit einer der Schnittstellenkennungen einer gespeicherten Gruppe übereinstimmt, so dass der Schnittstelle, auf welche sich die Anforderung bezieht, eine Schnittstellennetzwerk-Kennung zugeordnet wird, welche entweder im Fall der Übereinstimmung die gemäß einer der Gruppen gespeicherte Kennung ist, oder, wenn keine Übereinstimmung besteht, eine neue Kennung ist.

4. Verfahren nach Anspruch 3, **dadurch gekennzeichnet, dass** man im Fall der Zuordnung einer neuen Schnittstellennetzwerk-Kennung jede neue Schnittstellennetzwerk-Kennung gemäß der Gruppe der empfangenen Schnittstellenkennungen in der besagten Tabelle des besagten Servers (SPb) speichert.

5. Verfahren nach einem der Ansprüche 3 und 4, **dadurch gekennzeichnet, dass** man im Fall der Übereinstimmung zwischen mindestens einer der in einer Anforderung empfangenen Schnittstellenkennungen und einer der Schnittstellenkennungen einer gespeicherten Gruppe bestimmt, ob die empfangene Gruppe von Schnittstellenkennungen vollständig mit der gespeicherten Gruppe übereinstimmt ist, um die besagte gespeicherte Gruppe bei unvollständiger Übereinstimmung zu aktualisieren.

6. Verfahren nach einem der Ansprüche 1 bis 5, **dadurch gekennzeichnet, dass** man in die besagte Anforderung für die Zuordnung einer Schnittstellennetzwerk-Kennung eine Sequenzkennung integriert, um deren Übertragung an den besagten Server (SPb) in der Form einer Folge von Paketen, welche jeweils eine selbe Sequenzkennung aufweisen, zu ermöglichen.

7. Verfahren nach einem der Ansprüche 1 bis 6, **dadurch gekennzeichnet dass** man, wenn eine Zuordnung einer Schnittstellennetzwerk-Kennung für eine an einen Link (L4) angeschlossene Schnittstelle (I12) benötigt wird, an der Netzwerkeinrichtung (NE1), zu welcher die besagte Schnittstelle (I12) gehört, die Kennungen der an denselben Link angeschlossenen Schnittstellen bestimmt.

8. Verfahren nach Anspruch 7, **dadurch gekennzeichnet, dass** man die besagte Bestimmung anhand eines Auffindungsprotokolls für das Auffinden von benachbarten Schnittstellen durchführt.

9. Verfahren nach Anspruch 8, **dadurch gekennzeichnet, dass** das besagte Auffindungsprotokoll für das Auffinden von benachbarten Schnittstellen das NDP-Protokoll ist, wobei jede bestimmte Schnittstellenkennung demzufolge eine link-lokale Adresse ist.

10. Server (SPb) für die dynamische Zuordnung von Schnittstellennetzwerk-Kennungen für die IP-Konfiguration von Schnittstellen (I12) von an ein internetprotokollbasiertes Kommunikationsnetzwerk angeschlossenen Netzwerkeinrichtungen (NE1), wobei der besagte Server Verarbeitungsmittel (MT) umfasst, welche dazu ausgelegt sind, im Fall des Empfangs einer Anforderung für die Zuordnung einer Schnittstellennetzwerkkennung für eine Schnittstelle (I12) einer an einen Link (L4) angeschlossenen Netzwerkeinrichtung (NE1), für die besagte Schnittstelle (I12), auf welche sich die Anforderung bezieht, eine Schnittstellennetzwerk-Kennung in Hinsicht auf die Übertragung der besagten bestimmten Schnittstellennetzwerk-Kennung an die besagte anfordernde Netzwerkeinrichtung (NE1) zu bestimmen, damit sie die besagte Schnittstelle (I12) konfiguriert, **dadurch gekennzeichnet, dass** der besagte Server vom Typ DHCP ist, und dass die besagten Verarbeitungsmittel dazu ausgelegt sind, im Fall des Empfangs einer Anforderung für die Zuordnung einer Schnittstellennetzwerkkennung, welche die Kennung der Schnittstelle (I12), auf welche sich die Anforderung bezieht, sowie die Schnittstellenkennungen der übrigen an denselben Link (L4) wie die Schnittstelle, auf welche sich die Anforderung bezieht, angeschlossenen Schnittstellen enthält, für die besagte Schnittstelle (I12), auf welche sich die Anforderung bezieht, eine für alle an denselben Link (L4) wie die Schnittstelle, auf welche sich die Anforderung bezieht, angeschlossenen Schnittstellen gemeinsame Schnittstellennetzwerk-Kennung zu bestimmen.

11. Server nach Anspruch 10, **dadurch gekennzeichnet, dass** er einen Speicher (M1) umfasst, welcher dazu bestimmt ist, jede Schnittstellennetzwerk-Kennung, die von den besagten Verarbeitungsmitteln (MT) bestimmt wurde, gemäß den empfangenen, einem selben Link (L4) zugeordneten Schnittstellenkennungen, welche eine Gruppe bilden, in einer Tabelle zu speichern.

12. Server nach Anspruch 11, **dadurch gekennzeichnet, dass** die besagten Verarbeitungsmittel (MT) dazu ausgelegt sind, zu bestimmen, ob zumindest eine der besagten in einer Anforderung empfangenen Schnittstellenkennungen mit einer der Schnittstellenkennungen einer in dem besagten Speicher (M1) gespeicherten Gruppe übereinstimmt ist und anschließend der Schnittstelle (I12), auf welche sich die Anforderung bezieht, eine Schnittstellennetzwerk-Kennung zuzuordnen, welche entweder die gemäß einer der Gruppen gespeicherte Kennung ist, wenn eine Übereinstimmung besteht, oder eine neue Kennung ist, wenn keine Übereinstimmung besteht.

13. Server nach Anspruch 12, **dadurch gekennzeichnet, dass** die besagten Verarbeitungsmittel (MT) dazu ausgelegt sind, im Fall der Zuordnung einer neuen Schnittstellennetzwerk-Kennung jede neue Schnittstellennetzwerk-Kennung gemäß der empfangenen Gruppe von Schnittstellenkennungen in der Tabelle des besagten Speichers (M1) zu speichern.

14. Server nach einem beliebigen der Ansprüche 12 und 13, **dadurch gekennzeichnet, dass** die besagten Verarbeitungsmittel (MT) dazu ausgelegt sind, im Fall der Übereinstimmung zwischen mindestens einer der in einer Anforderung empfangenen Schnittstellenkennungen und einer der Schnittstellenkennungen einer gespeicherten Gruppe zu bestimmen, ob die empfangene Gruppe von Schnittstellenkennungen vollständig mit der besagten gespeicherten Gruppe übereinstimmt, und wenn keine vollständige Übereinstimmung besteht, die in dem besagten Speicher (M1) gespeicherte Gruppe anschließend zu aktualisieren.

15. IP-Router (CPE) für ein internetprotokollbasiertes Kommunikationsnetzwerk, **dadurch gekennzeichnet, dass** er einen Server (SPb) nach einem der vorstehenden Ansprüche umfasst.

16. Netzwerkeinrichtung (NE1) für ein internetprotokollbasiertes Kommunikationsnetzwerk, welches einen Server (SPb) für die dynamische Zuordnung von Netzwerkkennungen nach einem der Ansprüche 10 bis 14 umfasst, wobei die besagte Netzwerkeinrichtung (NE1) mindestens eine an einen Link (L4) angeschlossene und mit einer Schnittstellenkennung assoziierte Schnittstelle (I12) sowie Verwaltungsmittel ((MG) umfasst, welche dazu ausgelegt sind, wenn für die besagte Schnittstelle (I12) eine Schnittstellennetzwerk-Kennung gefordert wird, eine für den besagten Server (SPb) bestimmte Anforderung für die Zuordnung einer Schnittstellennetzwerk-Kennung zu erzeugen, **dadurch gekennzeichnet, dass** die besagten Verwaltungsmittel fähig sind, eine Anforderung für die Zuordnung einer Schnittstellennetzwerk-Kennung zu erzeugen, welche die Kennung der besagten Schnittstelle (I12) sowie die Schnittstellenkennungen der übrigen an den besagten Link (L4) angeschlossenen Schnittstellen spezifiziert.

17. Netzwerkeinrichtung nach Anspruch 16, **dadurch gekennzeichnet, dass** die besagten Verwaltungsmittel (MG) dazu ausgelegt sind, eine Sequenzkennung in die besagte Anforderung für die Zuordnung einer Schnittstellennetzwerk-Kennung zu integrieren, um deren Übertragung an den besagten Server (SPb) in der Form einer Paketsequenz, welche jeweils eine selbe Sequenzkennung aufweisen, zu ermöglichen.

18. Netzwerkeinrichtung nach einem der Ansprüche 16 und 17, **dadurch gekennzeichnet, dass** die besagten Verwaltungsmittel (MG) dazu ausgelegt sind, im Fall der Notwendigkeit der Zuordnung einer Schnittstellennetzwerk-Kennung für die besagte Schnittstelle (I12) die besagten Kennungen der an denselben Link (L4), an den auch sie angeschlossen ist, angeschlossenen Schnittstellen zu bestimmen.

19. Netzwerkeinrichtung nach Anspruch 18, **dadurch gekennzeichnet, dass** es Bestimmungsmittel (MD) umfasst, welche dazu ausgelegt sind, anhand eines Auffindungsprotokolls für das Auffinden von benachbarten Schnittstellen eine Kennung für die zu konfigurierende Schnittstelle (I12) und Kennungen für die an denselben Link (L4) wie die besagte zu konfigurierende Schnittstelle (I12) angeschlossenen Schnittstellen zu bestimmen, und dass die besagten Verwaltungsmittel (MG) dazu ausgelegt sind, an den besagten Bestimmungsmittel (MD) die Kennung der besagten zu konfigurierenden Schnittstelle (I12) und die Kennungen der besagten übrigen an denselben Link (L4) wie sie angeschlossenen Schnittstellen zu bestimmen.

20. Netzwerkeinrichtung nach Anspruch 19, **dadurch gekennzeichnet, dass** das besagte Auffindungsprotokoll für das Auffinden von benachbarten Schnittstellen das NDP-Protokoll ist, wobei jede bestimmte Schnittstellenkennung demzufolge eine link-lokale Adresse ist.
